# EUROPEAN PATENT APPLICATION

(11) **EP 4 462 846 A1**
(43) Date of publication of application: **13.11.2024**
(21) Application number: 22917834.8
(22) Date of filing: 07.01.2022
(51) Int. Cl.: H04W 24/02

(54) **METHOD AND DEVICE FOR TRANSCEIVING INFORMATION, AND COMMUNICATION SYSTEM**

(71) Applicant: FUJITSU LIMITED, Kawasaki-shi, Kanagawa 211-8588 (JP)
(72) Inventor: LI, Guorong, Beijing 100022 (CN); JIA, Meiyi, Beijing 100022 (CN); WANG, Xin, Beijing 100022 (CN)
(74) Representative: Haseltine Lake Kempner LLP
(86) International application number: PCT/CN2022/070768
(87) International publication number: WO 2023/130362

(57) **Abstract**

Embodiments of the present disclosure provide an apparatus for transceiving information, applicable to a first terminal equipment (a remote UE), the apparatus including a first transceiving unit, the first transceiving unit being configured to: establish PC5 connection with a second terminal equipment (a relay UE); and receive at least one of a radio resource control resume (RRC resume) message, a radio resource control re-establishment (RRC re-establishment) message or a radio resource control reconfiguration (RRC reconfiguration) message via the second terminal equipment (the relay UE) by means of default configuration.

## Description

### TECHNICAL FIELD

The embodiments of the present disclosure relate to the field of communication technologies.

### BACKGROUND

Sidelink relay (SL Relay) technique is studied in 5G Release 17 (R17), which includes a scenario of a terminal equipment (such as a UE) to a network device relay (UE-to-Network Relay). A New Radio (NR) Uu link is used on a Uu interface of a relay terminal equipment (a relay UE), and on a PC5 interface between a remote terminal equipment (a remote UE) and the relay UE, it is assumed to use a NR sidelink. In the scenario of UE-to-Network Relay, the relay UE is also called a UE-to-Network relay UE.

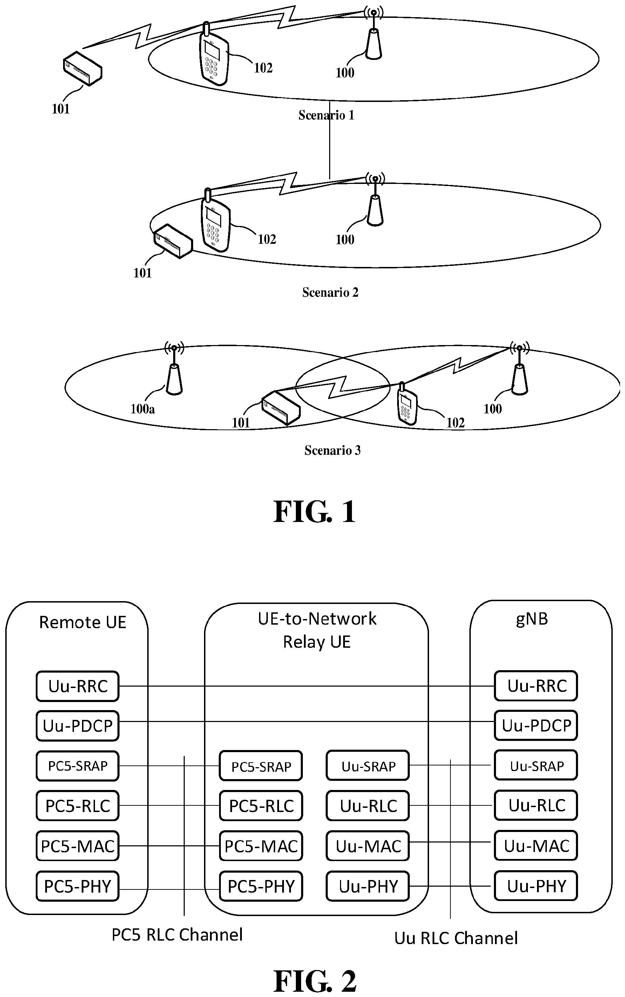

FIG. 1 is a schematic diagram of a scenario of UE-to-Network Relay.

As shown by Scenario 1 in FIG. 1, a remote UE 101 is out of coverage (OOC) of a network device 100, and a relay UE 102 is in coverage (IC) of the network device 100.

As shown by Scenario 2 in FIG. 1, the remote UE 101 is in coverage (IC) of the network device 100, and the relay UE 102 is in coverage (IC) of the network device 100.

As shown by Scenario 3 in FIG. 1, the remote UE 101 is in coverage (IC) of a network device 100a, the relay UE 102 is in coverage (IC) of the network device 100, and the network device 100a is different from the network device 100.

In a protocol stack of Version 17 Layer 2 Sidelink relay (R17 L2 SL relay), the Sidelink Relay Adaptation Protocol (SRAP) is introduced. For the UE-to-Network relay, at both the PC5 interface and the Uu interface, for control plane protocol stack and user plane protocol stack, an SRAP sublayer is above a Radio Link Control (RLC) sublayer. Uu Service Data Adaptation Protocol (SDAP), Packet Data Convergence Protocol (PDCP) and Radio Resource Control (RRC) terminate between a remote UE and a network device (e.g., gNB), while SRAP, RLC, Media Access Control (MAC) and physical (PHY) layers terminate at each link (i.e., a link between the remote UE and the relay UE, and a link between the relay UE and the gNB).

FIG. 2 is a schematic diagram of a control plane protocol stack of UE-to-Network relay.

For UE-to-Network relay, an SRAP sublayer on the PC5 interface is only used for the bearer mapping purpose. For relaying of a message of the remote UE on a Broadcast Control Channel (BCCH) and a Paging Control Channel (PCCH), the SRAP sublayer does not appear at a PC5 hop. For a message of the remote UE on signaling radio bearer 0 (SRBO), the SRAP sublayer does not appear at a PC5 hop, but appears at a Uu hop for a downlink (DL) and an uplink (UL).

For L2 UE-to-Network relay, at the uplink:
- A Uu SRAP sublayer supports uplink bearer mapping between an ingress PC5 radio link control channel (PC5 RLC channel) for relaying and an egress Uu RLC channel on a Relay UE Uu interface).
- The Uu SRAP sublayer supports remote UE identification of uplink services. At the uplink, identification information of a Uu Radio bearer of the remote UE, and a local remote UE ID thereof are included in a Uu SRAP head, so that the gNB associates a data packet received for a specific PDCP entity with a correct Uu radio bearer of the remote UE.
- The PC5 SRAP sublayer of the relay UE supports uplink (UL) bearer mapping between a Uu radio bearer of the remote UE and an egress Uu RLC channel.
- The PC5 SRAP sublayer of the remote UE supports UL bearer mapping between a Uu radio bearer of the remote UE and an egress PC5 RLC channel.

For L2 UE-to-Network relay, at the downlink:
- A Uu SRAP sublayer at a gNB side supports DL bearer mapping, mapping an end-to-end radio bearer (e.g., SRB and/or DRB) of the remote UE to a Uu RLC channel on a Uu interface of the relay UE.
- The Uu SRAP sublayer supports remote UE identification of downlink services. At the downlink, identification information of the Uu radio bearer of the remote UE, and a local remote UE ID are placed by the gNB in a Uu SRAP header, so that the relay UE maps a data packet received from the Uu radio bearer of the remote UE to its relevant PC5 RLC channel.
- The PC5 SRAP sublayer of the relay UE supports downlink bearer mapping between a Uu radio bearer of the remote UE and an egress PC5 RLC channel.

It should be noted that the above introduction to the technical background is just to facilitate a clear and complete description of the technical solutions of the present disclosure, and is elaborated to facilitate the understanding of persons skilled in the art. It cannot be considered that the above technical solutions are known by persons skilled in the art just because these solutions are elaborated in the Background of the present disclosure.

### SUMMARY

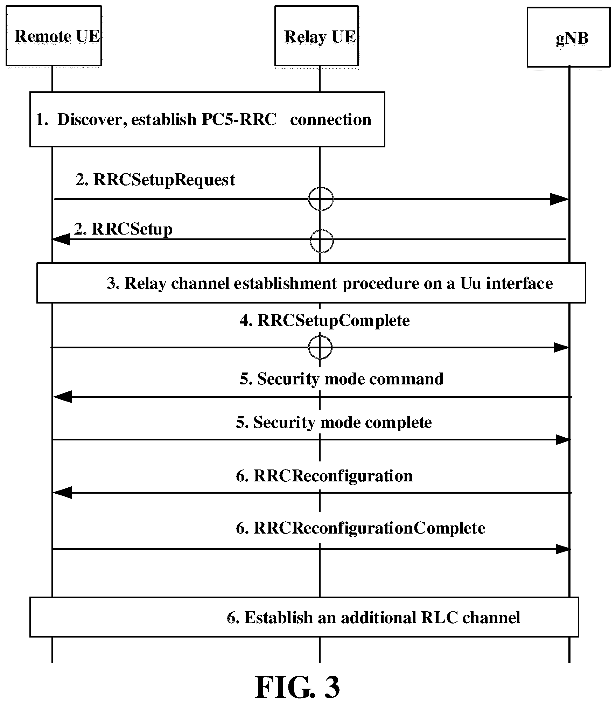

In UE-to-Network relay, a remote UE may access a network device via a relay UE, thereby communicating with the network device via the relay UE. FIG. 3 is a schematic diagram of an RRC connection establishment procedure when the remote UE accesses a network device via the relay UE, an RRC connection re-establishment procedure and an RRC resume procedure are similar to this.

As shown in FIG. 3, the RRC connection establishment procedure includes the following operations:
The procedure is described as follows:
1. The remote UE and the relay UE perform a discovery procedure and establish a PC5-RRC connection using a procedure in NR V2X.
2. The remote UE transmits a first RRC message (such as RRCSetupRequest) used to establish a connection between the remote UE and a gNB via the relay UE, and a specified PC5 RLC bearer configuration is used. If the relay UE is not in an RRC_CONNECTED mode, the relay UE needs to make its own connection establishment when receiving a message on the specified PC5 RLC bearer. The gNB responds to the RRCSetup message to the remote UE. Transfer of this RRCSetup to the remote UE uses the specified PC5 RLC bearer configuration.
3. The gNB and the relay UE perform a relay channel establishment procedure on a Uu interface. According to a configuration of the gNB, the relay UE and the remote UE establish an RLC channel to relay SRB 1 on the PC5 interface to the remote UE.
4. The remote UE transmits a RRCSetupComplete message to the gNB using a relay channel of SRB 1 on PC5, and a SRB1 relay channel on a Uu and configured to the relay UE. After that, the remote UE has an RRC connection on the Uu interface.
5. The remote UE and the gNB establish security by following the procedure of the Uu interface, and a security message is forwarded via the relay UE.
6. The gNB transmits an RRCReconfiguration message to the remote UE via the relay UE to establish SRB2/DRBs for relaying. The remote UE transmit an RRCReconfigurationComplete message to the gNB via the relay UE, as a response. In addition, the gNB establishes an additional RLC bearer or channel between the gNB and the relay UE, which is used for relay services.

For the procedure in FIG. 3, the SRAP-related configuration is included in the RRC Reconfiguration message (corresponding to the operation 6 in FIG. 3); for SRB0, SRAP does not appear on the PC5 interface, while for other SRBs (such as SRB1 or SRB2) and DRBs, SRAP appears by default on the PC5 interface, i.e., using a bearer mapping function of SRAP.

The inventor of the present disclosure finds: in the procedure shown in FIG. 3, the RRC setup complete message is transmitted by using SRB1, which requires use of the SRAP function on PC5 according to related arts; in addition, during the RRC re-establishment and RRC resume procedures, an RRC re-establishment message, an RRC re-establishment complete message, an RRC resume message, and an RRC resume complete message are all transmitted by using SRB1. These SRB1 messages are transmitted before the RRC reconfiguration procedure, the remote UE has not yet received the PC5 SRAP configuration at that moment, thus it is unclear how to use SRAP on the PC5 interface to transmit these messages on SRB 1.

For at least one of the above problems, the embodiments of the present disclosure provide a method and an apparatus for transceiving information, and a communication system. In the method for transceiving information, a first terminal equipment (such as a remote UE) establishes PC5 connection with a second terminal equipment (such as a relay UE), and the first terminal equipment (the remote UE) receives at least one of a radio resource control resume (RRC resume) message, a radio resource control re-establishment (RRC re-establishment) message or a radio resource control reconfiguration (RRC reconfiguration) message via the second terminal equipment (the relay UE) by means of default configuration; and/or the first terminal equipment (such as the remote UE) establishes PC5 connection with the second terminal equipment (such as the relay UE), and at least one of a radio resource control setup (RRC setup) message, a radio resource control resume (RRC resume) message or a radio resource control re-establishment (RRC re-establishment) message, received by the first terminal equipment via the second terminal equipment, includes sidelink relay adaptation protocol (SRAP)-related configuration. Hence, the remote UE and the relay UE are enabled to use a correct configuration to transmit and/or receive a relevant RRC message, which prevents a message transmission failure caused by inconsistent configuration between the remote UE and the relay UE, and helps the remote UE connect to or recover connection with a network device via the relay UE, and guarantees service quality and user experience of the remote UE.

According to one aspect of the embodiments of the present disclosure, an apparatus for transceiving information is provided, applicable to a first terminal equipment (a remote UE), the apparatus including a first transceiving unit, the first transceiving unit being configured to:
establish PC5 connection with a second terminal equipment (a relay UE); and
receive at least one of a radio resource control resume (RRC resume) message, a radio resource control re-establishment (RRC re-establishment) message or a radio resource control reconfiguration (RRC reconfiguration) message via the second terminal equipment (the relay UE) by means of default configuration.

According to another aspect of the embodiments of the present disclosure, an apparatus for transceiving information is provided, applicable to a second terminal equipment (a relay UE), the apparatus including a second transceiving unit, the second transceiving unit being configured to:
establish PC5 connection with a first terminal equipment (a remote UE); and
transmit to the first terminal equipment (the remote UE) at least one of a radio resource control resume (RRC resume) message, a radio resource control re-establishment (RRC re-establishment) message or a radio resource control reconfiguration (RRC reconfiguration) message by means of default configuration.

According to another aspect of the embodiments of the present disclosure, an apparatus for transceiving information is provided, applicable to a first terminal equipment (a remote UE), the apparatus including a third transceiving unit, the third transceiving unit being configured to:
establish PC5 connection with a second terminal equipment (a relay UE); and
receive at least one of a radio resource control setup (RRC setup) message, a radio resource control resume (RRC resume) message or a radio resource control re-establishment (RRC re-establishment) message via the second terminal equipment (the relay UE), at least one of the RRC setup message, the RRC resume message or the RRC re-establishment message including sidelink relay adaptation protocol (SRAP)-related configuration.

According to another aspect of the embodiments of the present disclosure, an apparatus for transceiving information is provided, applicable to a second terminal equipment (a relay UE), the apparatus including a fourth transceiving unit, the fourth transceiving unit being configured to:
establish PC5 connection with a first terminal equipment (a remote UE); and
transmit to the first terminal equipment (the remote UE) at least one of a radio resource control setup (RRC setup) message, a radio resource control resume (RRC resume) message or a radio resource control re-establishment (RRC re-establishment) message, at least one of the RRC setup message, the RRC resume message or the RRC re-establishment message including sidelink relay adaptation protocol (SRAP)-related configuration.

One of the advantageous effects of the embodiments of the present disclosure is: to enable the remote UE and the relay UE to use a correct configuration to transmit and/or receive a relevant RRC message, which prevents a message transmission failure caused by inconsistent configuration between the remote UE and the relay UE, and helps the remote UE connect to or recover connection with a network device via the relay UE, and guarantees service quality and user experience of the remote UE.

Referring to the later description and drawings, specific implementations of the present disclosure are disclosed in detail, indicating a manner that the principle of the present disclosure can be adopted. It should be understood that the implementations of the present disclosure are not limited in terms of the scope. Within the scope of the spirit and terms of the appended claims, the implementations of the present disclosure include many changes, modifications and equivalents.

Features that are described and/or shown with respect to one implementation can be used in the same way or in a similar way in one or more other implementations, can be combined with or replace features in the other implementations.

It should be emphasized that the term "comprise/include" when being used herein refers to the presence of a feature, a whole piece, a step or a component, but does not exclude the presence or addition of one or more other features, whole pieces, steps or components.

### BRIEF DESCRIPTION OF DRAWINGS

An element and a feature described in a drawing or an implementation of the present embodiments of the present disclosure can be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a scenario of UE-to-Network Relay;
FIG. 2 is a schematic diagram of a control plane protocol stack of UE-to-Network relay;
FIG. 3 is a schematic diagram of an RRC connection establishment procedure when the remote UE accesses a network device via the relay UE;
FIG. 4 is a schematic diagram of a method for transceiving information in the embodiments of a first aspect;
FIG. 5 is a schematic diagram of a flow of establishing UE-to-Network relay connection, corresponding to Implementation 1;
FIG. 6 (a) is a schematic diagram of a flow of an RRC re-establishment procedure;
FIG. 6 (b) is another schematic diagram of a flow of an RRC re-establishment procedure;
FIG. 7 is a schematic diagram of an apparatus for transceiving information described in the embodiments of a third aspect;
FIG. 8 is a schematic diagram of an apparatus for transceiving information described in the embodiments of a fourth aspect;
FIG. 9 is a schematic diagram of an apparatus for transceiving information described in the embodiments of a fifth aspect;
FIG. 10 is a schematic diagram of an apparatus for transceiving information described in the embodiments of a sixth aspect;
FIG. 11 is a schematic diagram of an apparatus for transceiving information described in the embodiments of a seventh aspect;
FIG. 12 is a schematic diagram of an apparatus for transceiving information described in the embodiments of an eighth aspect;
FIG. 13 is a schematic diagram of an apparatus for transceiving information described in the embodiments of a ninth aspect;
FIG. 14 is a schematic diagram of a terminal equipment in a communication system in the embodiments of the eighth aspect; and
FIG. 15 is a schematic diagram of a network device in a communication system in the embodiments of a tenth aspect;

### DETAILED DESCRIPTION

Referring to the drawings, through the following Specification, the aforementioned and other features of the present disclosure will become obvious. The Specification and the figures specifically disclose particular implementations of the present disclosure, showing partial implementations which can adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as New Radio (NR), Long Term Evolution (LTE), LTE-Advanced (LTE-A), Wideband Code Division Multiple Access (WCDMA), High-Speed Packet Access (HSPA).

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: an Integrated Access and Backhaul node (IAB-node), a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC).

The base station may include but be not limited to: node B (NodeB or NB), evolution node B (eNodeB or eNB) and a 5G base station (gNB), and may further includes Remote Radio Head (RRH), Remote Radio Unit (RRU), a relay or a low power node (such as femeto, pico). And the term "BS" may include some or all functions thereof, each BS may provide communication coverage to a specific geographic region. The term "a cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment can be fixed or mobile, and can also be referred to as Mobile Station (MS), a terminal, Subscriber Station (SS), Access Terminal (AT), a relay device, a routing device and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a router, a digital camera.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipment as described above.

In the embodiments of the present disclosure, high layer signaling may be e.g. radio resource control (RRC) signaling; for example, is called an RRC message, for example includes an MIB, system information, and a dedicated RRC message; or is called an RRC information element (RRC IE). The high layer signaling, for example, may further be Medium Access Control (MAC) signaling; or called a MAC control element (MAC CE). However, the present disclosure is not limited to this.

In each embodiment of the present disclosure, the first terminal equipment may be remote UE 101 as shown in FIG. 1, the second terminal equipment may be relay UE 102 as shown in FIG. 1, and the network device may be network device 100 as shown in FIG. 1.

In the UE-to-Network relay scenario, the first terminal equipment can communicate with the network device via the second terminal equipment, that is, the communication path is an indirect path.

In each embodiment of the present disclosure, the second terminal equipment (such as the relay UE) transmits a message to the first terminal equipment (such as the remote UE), whose meaning is: the second terminal equipment transmits a message generated by itself to the first terminal equipment; or, the second terminal equipment forwards a message received from a network device to the first terminal equipment, wherein the second terminal equipment does not parse the message, or the second terminal equipment does not use a protocol layer corresponding to the message to parse the message, or the second terminal equipment transmits the message transparently, etc. For example, a radio resource control setup (RRC setup) message, a radio resource control resume (RRC resume) message, a radio resource control re-establishment (RRC re-establishment) message and a radio resource control reconfiguration (RRC reconfiguration) message, etc. are transmitted by the second terminal equipment to the first terminal equipment.

Similarly, the second terminal equipment (such as the relay UE) transmits a message to a network device (such as a gNB), whose meaning is: the second terminal equipment transmits a message generated by itself to the network device; or, the second terminal equipment forwards a message received from the first terminal equipment to the network device, wherein the second terminal equipment does not parse the message, or the second terminal equipment does not use a protocol layer corresponding to the message to parse the message, or the second terminal equipment transmits the message transparently, etc. For example, a radio resource control re-establishment complete (RRC re-establishment complete) message and a radio resource control reconfiguration complete (RRC reconfiguration complete) message, etc. are forwarded by the second terminal equipment to the network device.

### Embodiments of a first aspect

Embodiments of a first aspect of the present disclosure provide a method for transceiving information.

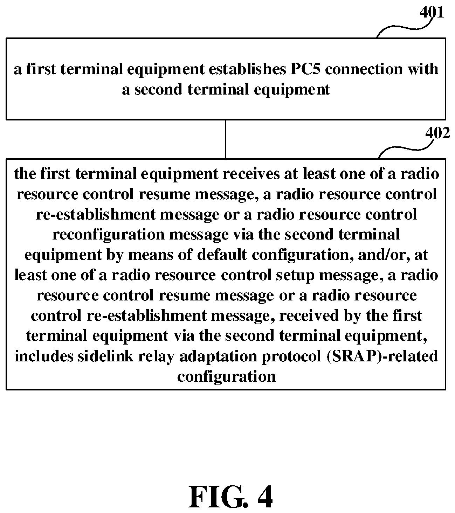

FIG. 4 is a schematic diagram of a method for transceiving information in the embodiments of a first aspect. As shown in FIG. 4, a method for transceiving information includes:
Operation 401, a first terminal equipment establishes PC5 connection with a second terminal equipment;
Operation 402, the first terminal equipment receives at least one of a radio resource control resume (RRC resume) message, a radio resource control re-establishment (RRC re-establishment) message or a radio resource control reconfiguration (RRC reconfiguration) message via the second terminal equipment (the relay UE) by means of default configuration, and/or, at least one of a radio resource control setup (RRC setup) message, a radio resource control resume (RRC resume) message or a radio resource control re-establishment (RRC re-establishment) message, received by the first terminal equipment via the second terminal equipment, includes sidelink relay adaptation protocol (SRAP)-related configuration.

In the operation 402, default configuration e.g. includes default sidelink radio link control bearer configuration (sidelink RLC bearer configuration) and/or default SRAP-related configuration, etc., the default configuration may further be a specified or predefined configuration, etc.

In some embodiments, the default sidelink radio link control bearer configuration may be default configuration used by a sidelink RLC bearer (or sidelink RLC channel) for transmission of an SRB0 message of the first terminal equipment, the sidelink RLC bearer that uses this default configuration is called SL-RLCO, and this default configuration is called SL-RLCO default configuration.

In some embodiments, the SL-RLCO default configuration may include at least one of the following: an RLC mode (such as a transparent mode TM or acknowledged mode AM), a serial number length (sn-field Length, for example the value is 12), a reassembly timer (t-Reassembly), a logical channel ID (for example the value is 4), a priority (for example the value is 1), a preferred bit rate (for example the value is infinite), or a logical channel group (for example the value is 0).

In some other embodiments, the default sidelink radio link control bearer configuration may be default configuration used by a sidelink RLC bearer (or sidelink RLC channel) for transmission of a specific SRB 1 message of the first terminal equipment, the specific SRB 1 message may include at least one of RRC resume, RRC re-establishment or RRC reconfiguration messages, the sidelink RLC bearer that uses this default configuration is called SL-RLC1, and this default configuration is called SL-RLC1 default configuration.

In some embodiments, the SL-RLC1 default configuration may include at least one of the following: an RLC mode (such as an acknowledged mode AM), an RLC serial number length (sn-field Length, for example the value is 12), a reassembly timer (t-Reassembly), a logical channel ID (for example the value is 4), a priority (for example the value is 1), a preferred bit rate (for example the value is infinite), or a logical channel group (for example the value is 0).

In some embodiments, default SRAP-related configuration may include at least one of the following: a local/temporary identifier of the first terminal equipment (the remote UE), an added mapping list or a deleted mapping list. The added mapping list may include at least one of the following: a radio bearer identifier (RB-Identity) of the remote UE, or PC5 RLC channel configuration information (or sidelink RLC bearer configuration information) corresponding to the radio bearer.

In some embodiments, default SRAP-related configuration includes default SRAP configuration of SRB0 and/or default SRAP configuration of SRB1.

In some embodiments, for the default SRAP configuration of SRB0, a value of RB-Identity of the remote UE may be 0 or SRB0, PC5 RLC channel configuration information (or sidelink RLC bearer configuration information) may be a sidelink RLC bearer configuration index, for example its value is 0, the sidelink RLC bearer configuration index may correspond to sidelink RLC configuration and/or sidelink MAC logical channel configuration. The sidelink RLC configuration includes an RLC mode (such as TM or AM) and its corresponding parameter, for example when the RLC mode is AM, its corresponding parameter may include at least one of a sidelink serial number length (for example the value is 12), a polling retransmission time (sl-T-PollRetransmit), a polling PDU (sl-PollPDU), a polling byte (sl-PollByte) or a maximum retransmission threshold, etc; the sidelink MAC logical channel configuration may include at least one of the following: a priority (for example, being 1), a preferred bit rate (for example, being infinite), a size length of a token bucket (for example, being infinite), whether to allow grant of Type 1 configuration (for example, not allowed), whether to enable a HARQ feedback (for example, a value is taken as enabled), a list of allowed subcarrier intervals (for example, all subcarrier intervals are allowed), a maximum PUSCH duration (for example, the value is 0.25 ms or 0.5 ms, etc.), a logical channel group (for example, the value is 0), a scheduling request identifier (for example, the value is 0, etc.), or whether to apply a sidelink logical channel SR delay timer (for example, the SR delay timer is not applied), etc. The deleted mapping list may include a radio bearer identifier (RB-Identity) of the remote UE, for example the value is 0 or SRB0.

In some embodiments, for the default SRAP configuration of SRB 1, a value of RB-Identity of the remote UE may be 1 or SRB1, PC5 RLC channel configuration information (or sidelink RLC bearer configuration information) may be a sidelink RLC bearer configuration index, the value may be an integer ranging from 1 to 512, for example the default value is 1, the sidelink RLC bearer configuration index may correspond to sidelink RLC configuration and/or sidelink MAC logical channel configuration. The sidelink RLC configuration includes an RLC mode AM and its corresponding parameter, its corresponding parameter may include at least one of a sidelink serial number length (for example the value is 12), a polling retransmission time (sl-T-PollRetransmit), a polling PDU (sl-PollPDU), a polling byte (sl-PollByte) or a maximum retransmission threshold, etc; the sidelink MAC logical channel configuration may include at least one of the following: a priority (for example, being 1), a preferred bit rate (for example, being infinite), a size length of a token bucket (for example, being infinite), whether to allow grant of Type 1 configuration (for example, not allowed), whether to enable a HARQ feedback (for example, a value is taken as enabled), a list of allowed subcarrier intervals (for example, all subcarrier intervals are allowed), a maximum PUSCH duration (for example, the value is 0.25 ms or 0.5 ms, etc.), a logical channel group (for example, the value is 0), a scheduling request identifier (for example, the value is 0, etc.), or whether to apply a sidelink logical channel SR delay timer (for example, the SR delay timer is not applied), etc. The deleted mapping list may include a radio bearer identifier (RB-Identity) of the remote UE, for example the value is 1 or SRB1.

For example, SRB1 default SRAP-related configuration and/or use the SL-RLC1 default configuration for SRB1 may be used when the first terminal equipment transmits a radio resource control re-establishment request (RRC re-establishment request) message or a radio resource control resume request (RRC resume request) message or when the first terminal equipment initiates a radio resource control re-establishment procedure or a radio resource control resume procedure.

According to the embodiments of the first aspect, during the RRC connection establishment or re-establishment or resume procedure, the first terminal equipment (such as the remote UE) and the second terminal equipment (such as the relay UE) are enabled to use a correct configuration at the PC5 interface to transmit and/or receive a relevant RRC message, which prevents a message transmission failure caused by inconsistent configuration between the remote UE and the relay UE, and helps the remote UE reestablish connection to or recover connection with a network device via the relay UE, and guarantees service quality and user experience of the remote UE.

The description on the operation 402 is made below by combining with specific implementations.

### Implementation 1:

In the implementation 1, an RRC setup message (which, for example, is transmitted using SRBO) includes SRAP-related configuration. For example:
- The SRAP-related configuration includes SRAP-related configuration for SRB1. For example, the SRAP-related configuration for SRB1 may include at least one of the following: a local/temporary identifier of a first terminal equipment (a remote UE) or an added mapping list. The added mapping list may include at least one of the following: a radio bearer identifier (RB-Identity) of the remote UE, or PC5 RLC channel configuration information (or sidelink RLC bearer configuration information) corresponding to the radio bearer. For example, RB-Identity of the remote UE may be 1 or SRB1, PC5 RLC channel configuration information (or sidelink RLC bearer configuration information) may be a sidelink RLC bearer configuration index, the sidelink RLC bearer configuration index may correspond to sidelink RLC configuration and/or sidelink MAC logical channel configuration. The sidelink RLC configuration includes an RLC mode AM and its corresponding parameter, its corresponding parameter may include at least one of a sidelink serial number length, a polling retransmission time, a polling PDU, a polling byte or a maximum retransmission threshold, etc; the sidelink MAC logical channel configuration may include at least one of the following: a priority, a preferred bit rate, a size length of a token bucket, whether to allow grant of Type 1 configuration, whether to enable a HARQ feedback, a list of allowed subcarrier intervals, a maximum PUSCH duration, a logical channel group, a scheduling request identifier, or whether to apply a sidelink logical channel SR delay timer, etc.
- An RRC setup request messages (transmitted by the remote UE to a gNB via a relay UE) and the RRC setup messages (transmitted by the gNB to the remote UE via the relay UE) are transmitted using default configuration of SL-RLCO on a PC5 interface.
- After the remote UE receives the SRAP-related configuration in the RRC setup message, the remote UE can perform at least one of the following operations: establishing an SRAP entity, configuring parameters of the SRAP entity according to the SRAP-related configuration, applying an UE identity (such as UE-IdentityRemote) in the RRC setup message as a cell radio network temporary identity (C-RNTI) of the remote UE, and transmitting a radio resource control setup complete (RRC setup complete) message based on the SRAP-related configuration (for example, using the parameters of the configured SRAP entity).

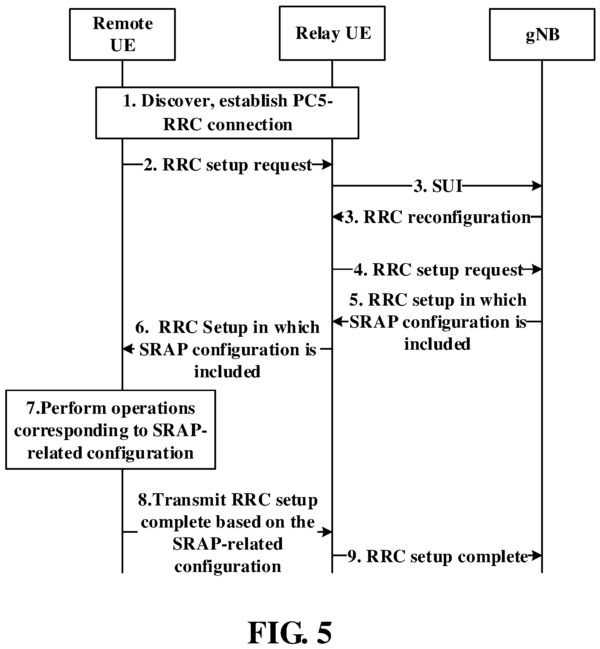

FIG. 5 is a schematic diagram of a flow of establishing UE-to-Network relay connection, corresponding to Implementation 1. As shown in FIG. 5, the flow includes the following operations:
Operation 1. A remote UE discovers a relay UE, PC5 connection is established between the two.
Operation 2. The remote UE transmits an RRC setup request message to the relay UE.
Operations 3a to 3b. The relay UE reports L2 ID of the remote UE to a gNB through Sidelink UE Information (SUI), the gNB transmits an RRC reconfiguration message to the relay UE, in which SRAP configuration of the relay UE is configured, SRAP configuration of an Uu interface and SRAP configuration of a PC5 interface, etc. may be included.
Operation 4. The relay UE forwards the RRC setup request transmitted by the remote UE in Operation 2 to the gNB.
Operation 5. The gNB transmits the RRC setup message to the relay UE, the RRC setup message including SRAP-related configuration for the remote UE.
Operation 6. The relay UE forwards the RRC setup message to the remote UE.
Operation 7. The remote UE performs operations corresponding to the SRAP-related configuration, such as: establishing an SRAP entity; and/or, configuring parameters of the SRAP entity according to the SRAP-related configuration; and/or, applying an UE identity (such as UE-IdentityRemote) in the RRC setup message as a cell radio network temporary identity (C-RNTI) of the remote UE, etc.
Operation 8. The remote UE transmits a radio resource control setup complete (RRC setup complete) message based on the SRAP-related configuration (for example, using the parameters of the configured SRAP entity).
Operation 9. The relay UE forwards the RRC setup complete message transmitted by the remote UE to the gNB.

### Implementation 2:

In the implementation 2, the default configuration in Operation 402 may, for example, be default SRAP configuration of SRB1 and/or SL-RLC1 default configuration. For an RRC resume message and/or an RRC re-establishment message, since these two messages are transmitted using SRB1, when a relay UE receives these messages from a gNB, the relay UE transmits them to a remote UE using the default SRAP-related configuration and/or the SL-RLC1 default configuration at a PC5 interface.

In one embodiment of the implementation 2, the relay UE has been configured by a network device with SRAP configuration of a Uu interface and SRAP configuration of the PC5 interface. When the relay UE receives at the Uu interface an SRB1 message transmitted by a gNB to the remote UE via the relay UE, it needs to determine that the SRB1 message is transmitted to the remote UE using default configuration at the PC5 interface or using the SRAP configuration of the PC5 interface as configured by the network device. For example, if the SRB1 message received by the relay UE is a first SRB1 message to be received after the remote UE transmits an SRB0 message to the gNB, or if the relay UE receives an SRB 1 bearer RRC resume message or RRC re-establishment message, the message is transmitted to the remote UE using the default configuration at the PC5 interface, otherwise at the PC5 interface, the message is transmitted to the remote UE using the SRAP configuration of the PC5 interface as configured by the network device.

In the implementation 2, the remote UE uses the default SRAP-related configuration and/or the SL-RLC1 default configuration for SRB1 when transmitting the RRC re-establishment request message or RRC resume request message (both of which are transmitted in SRBO), so as to receive the RRC resume message or RRC re-establishment message transmitted by the gNB using SRB1.

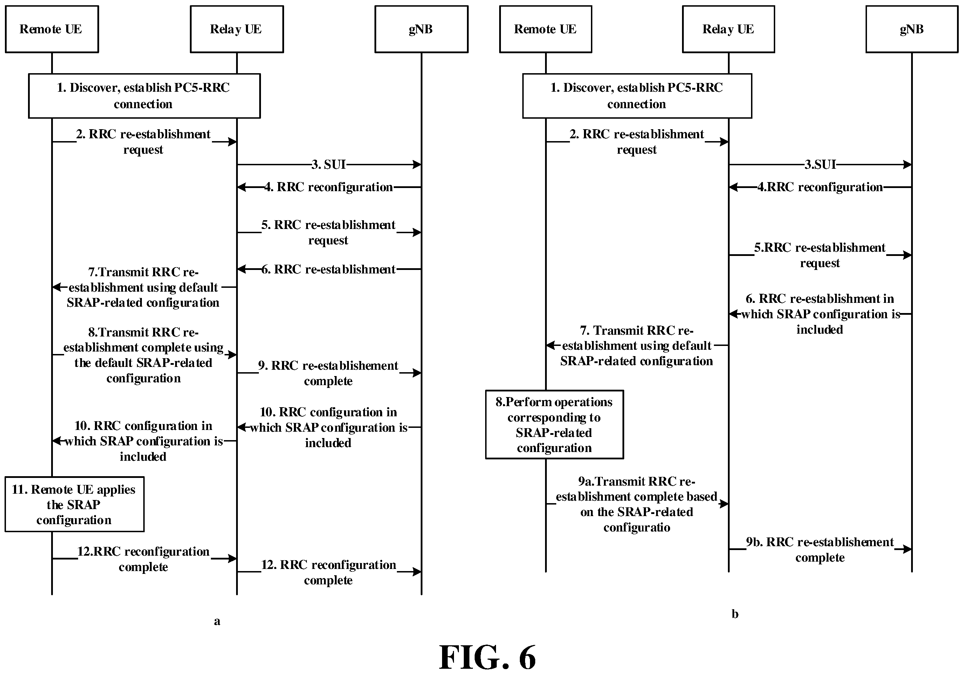

FIG. 6 (a) is a schematic diagram of a flow of an RRC re-establishment procedure. FIG. 6 (b) is another schematic diagram of a flow of an RRC re-establishment procedure. In addition, an RRC resume procedure is similar to an RRC re-establishment procedure, that is, the remote UE transmits an RRC resume request via the relay UE, receives the RRC resume message transmitted by the gNB via the relay UE, and transmits the RRC resume complete message to the gNB via the relay UE.

Corresponding to FIG. 6 (a) below, in one embodiment of the implementation 2, the RRC resume complete message and/or RRC re-establishment complete message transmitted by the remote UE to the relay UE may use the default SRAP-related configuration and/or the SL-RLC1 default configuration.

Corresponding to FIG. 6 (b) below, in another embodiment of the implementation 2, the RRC resume message and/or RRC re-establishment message may include SRAP-related configuration of the remote UE. The remote UE may apply the SRAP-related configuration and transmit an RRC resume complete message and/or an RRC re-establishment complete message. For the SRAP-related configuration, the description in the implementation 1 may be referred to.

RRC re-establishment procedures as shown in FIG. 6 (a) and FIG. 6 (b) are described below respectively.

The flow described in FIG. 6 (a) includes the following operations:
Operation 1. The remote UE and the relay UE perform a discovery procedure and establish a PC5-RRC connection using a NR V2X procedure.
Operation 2. The remote UE transmits an RRC re-establishment request message (transmitted using SRBO) to the relay UE by using SL-RLCO default configuration. The remote UE uses default SRAP-related configuration for SRB1 (such as default SRAP configuration for SRB1) and/or SL-RLC1 default configuration.
Operations 3 to 4. The relay UE reports L2 ID of the remote UE to a gNB through Sidelink UE Information (SUI), the gNB transmits an RRC reconfiguration message to the relay UE, in which SRAP configuration of the relay UE is configured, SRAP configuration of an Uu interface and SRAP configuration of a PC5 interface, etc. may be included.
Operation 5. The relay UE forwards the RRC re-establishment request message of the remote UE to the gNB by using Uu SRAP configuration.
Operation 6. The gNB transmits the RRC re-establishment message to the remote UE via the relay UE. The relay UE may know that the received message is an SRB 1 message of the remote UE based on information in an Uu SRAP header.
Operation 7. The relay UE transmits the SRB1 message to the remote UE by using the default SRAP-related configuration and/or the SL-RLC1 default configuration at the PC5 interface.
Operation 8. The remote UE transmits an RRC re-establishment complete message to the relay UE by using the default SRAP-related configuration and/or the SL-RLC1 default configuration.
Operation 9. The relay UE forwards the RRC re-establishment complete message to the gNB.
Operation 10. The gNB transmits an RRC reconfiguration message to the remote UE via the relay UE, the RRC reconfiguration message may include SRAP-related configuration of the remote UE. The RRC reconfiguration message may be transmitted by using the default SRAP-related configuration and/or the SL-RLC1 default configuration.
Operation 11. The remote UE applies the SRAP-related configuration of the remote UE included in the RRC reconfiguration message.
Operation 12. The remote UE transmits the RRC reconfiguration complete message to the gNB via the relay UE.

The flow described in FIG. 6 (b) includes the following operations:
Operations 1 to 5 are the same as Operations 1 to 5 in the flow described in FIG. 6 (a).
Operation 6. The gNB transmits the RRC re-establishment message to the remote UE via the relay UE. The RRC re-establishment message includes the SRAP-related configuration of the remote UE. The relay UE may know that the received message is an SRB1 message of the remote UE based on information in an Uu SRAP header.
Operation 7. The relay UE transmits the received SRB1 message of the remote UE to the remote UE by using the default SRAP-related configuration and/or the SL-RLC1 default configuration at the PC5 interface.
Operation 8. The remote UE performs corresponding operations based on the SRAP-related configuration included in the RRC re-establishment message, such as establishing an SRAP entity and performing the SRAP-related configuration, etc.
Operation 9a. The remote UE transmits the RRC re-establishment complete message by using the SRAP-related configuration at the PC5 interface.
Operation 9b. The RRC re-establishment complete message is forwarded by the relay UE to the gNB through the Uu interface.

### Implementation 3:

In the implementation 3, the default configuration in Operation 402 may, for example, be default SRAP configuration of SRB0 and/or SL-RLCO default configuration. For example, the relay UE transmits an RRC resume message and/or RRC re-establishment message to the remote UE by using the default SRAP configuration of SRB0 and/or the SL-RLCO default configuration at the PC5 interface.

The RRC re-establishment procedure corresponding to the implementation 3 is similar to those in FIG. 6 (a) and FIG. 6 (b), the distinctions lie in:
- In Operation 7, the relay UE does not use SRAP at the PC5 interface (or SRAP does not appear, etc.), but uses the default SRAP configuration of SRB0 and/or the SL-RLC0 default configuration to transmit the RRC re-establishment message or RRC resume message. Correspondingly, the remote UE does not use SRAP to receive the RRC re-establishment message or RRC resume message, but the default SRAP configuration of SRB0 and/or the SL-RLCO default configuration to receive.
- If the RRC re-establishment message or RRC resume message does not include the SRAP configuration (similar to FIG. 6 (a)), in Operation 8, the remote UE transmits the RRC re-establishment complete message or RRC resume complete message to the relay UE by using the default SRAP configuration of SRB0 and/or the SL-RLCO default configuration. In Operation 10, the relay UE may transmit the RRC reconfiguration message to the remote UE by using the default SRAP configuration of SRB0 and/or the SL-RLCO default configuration.
- If the RRC re-establishment message or RRC resume message includes the SRAP configuration (similar to FIG. 6 (b)), in Operation 8, the remote UE applies the SRAP-related configuration, and in Operation 9, the remote UE transmits the RRC re-establishment complete message or RRC resume complete message to the relay UE based on the corresponding SRAP configuration.

According to the embodiments of the first aspect, during the RRC connection establishment or re-establishment or resume procedure, the first terminal equipment (such as the remote UE) and the second terminal equipment (such as the relay UE) are enabled to use a correct configuration to transmit and/or receive a relevant RRC message, which prevents a message transmission failure caused by inconsistent configuration between the remote UE and the relay UE, and helps the remote UE connect to or recover connection with a network device via the relay UE, and guarantees service quality and user experience of the remote UE.

### Embodiments of a second aspect

Embodiments of a second aspect of the present disclosure provide a method for transceiving information.

In at least one embodiment, the method for transceiving information may include operations of a remote UE on a Relay Adaptation Protocol (SRAP) entity.

The operations of the remote UE on the SRAP entity may include establishing, configuring, reconfiguring, modifying, or releasing the SRAP entity. The SRAP may include a PC5 SRAP or a Sidelink Relay Adaptation Protocol (SL SRAP).

For example, establishment of the SRAP (such as PC5 SRAP or SL SRAP) entity by the remote UE may be performed in at least one of the following procedures:
A first terminal equipment (remote UE) selects or reselect a second terminal equipment (relay UE);
The first terminal equipment (remote UE) initiates an RRC connection establishment procedure and/or an RRC re-establishment procedure and/or an RRC resume procedure via the second terminal equipment (relay UE);
The first terminal equipment (remote UE) transmits an RRC setup request and/or an RRC re-establishment request and/or an RRC resume request via the second terminal equipment (relay UE);
The first terminal equipment (remote UE) receives RRC setup and/or RRC re-establishment and/or RRC resume and/or RRC reconfiguration message(s) via the second terminal equipment (relay UE); or
The first terminal equipment (remote UE) receives from a gNB an RRC reconfiguration message for a path switch to the second terminal equipment (relay UE) (direct-to-indirect path switch).

For another example, configuration, reconfiguration or modification of the SRAP (PC5 SRAP or SL SRAP) entity by the remote UE may be performed in at least one of the following procedures:
The first terminal equipment (remote UE) uses default SRAP-related configuration; or
The first terminal equipment (remote UE) receives SRAP-related configuration included in an RRC setup and/or an RRC re-establishment and/or an RRC resume and/or RRC reconfiguration message;
For another example, release of the SRAP (PC5 SRAP or SL SRAP) entity by the remote UE may be performed in at least one of the following procedures:
   The first terminal equipment (remote UE) switches from communication with the gNB via relay to direct communication with the gNB (indirect-to-direct path switch);
   PC5 connection (such as PC5-RRC connection or PC5 unicast link) between the first terminal equipment (remote UE) and the second terminal equipment (relay UE) is released; or
   The first terminal equipment (remote UE) enters a radio resource control idle (RRC _Idle) or radio resource control inactive (RRC _Inactive) state.

In at least another embodiment, the method for transceiving information may include operations of a relay UE on a Relay Adaptation Protocol (SRAP) entity. The operations of the relay UE on the SRAP entity may include establishing, configuring, reconfiguring, modifying, or releasing the SRAP entity. The SRAP may include a PC5 SRAP or a Uu SRAP or a SL SRAP.

For example, establishment of the SRAP (PC5 SRAP or SL SRAP) entity by the relay UE may be performed in at least one of the following procedures:
Being authorized and/or authenticated as a second terminal equipment (relay UE);
Establishing PC5 connection with a first terminal equipment (remote UE); (for example, may establish PC5 connection with the 1st first terminal equipment (remote UE));
Receiving an RRC setup request and/or an RRC re-establishment request and/or an RRC resume request transmitted by the first terminal equipment (remote UE); or
Receiving SL SRAP-related configuration included in an RRC setup and/or RRC re-establishment and/or RRC resume and/or RRC reconfiguration message(s) transmitted by the gNB;
For another example, configuration, reconfiguration or modification of the PC5 SRAP or SL SRAP) entity by the remote UE may be performed under the following conditions:
   Receiving SL SRAP-related configuration included in an RRC setup and/or RRC re-establishment and/or RRC resume and/or RRC reconfiguration message(s) transmitted by the gNB.

For another example, release of the PC5 SRAP or SL SRAP entity by the relay UE may be performed in at least one of the following procedures:
The first terminal equipment (remote UE) switches from communication with a network device via the second terminal equipment to direct communication with the network device (indirect-to-direct path switch);
PC5 connection (such as PC5-RRC connection or PC5 unicast link) between the first terminal equipment (remote UE) and the second terminal equipment (relay UE) is released; or
There is no PC5 connection between the first terminal equipment (remote UE) and the second terminal equipment (relay UE).

For another example, establishment of a Uu SRAP entity by the relay UE may be performed in at least one of the following procedures:
Being authorized and/or authenticated as a second terminal equipment (relay UE);
Establishing PC5 connection with a first terminal equipment (remote UE); for example, may establish PC5 connection with the 1st first terminal equipment (remote UE); or
Receiving Uu SRAP-related configuration included in an RRC setup and/or RRC re-establishment and/or RRC resume and/or RRC reconfiguration message(s) transmitted by the gNB.

For another example, configuration, reconfiguration or modification of the Uu SRAP entity by the relay UE may be performed under the following conditions:
Receiving SL SRAP-related configuration included in an RRC setup and/or RRC re-establishment and/or RRC resume and/or RRC reconfiguration message(s) transmitted by the gNB.

For another example, release of the Uu SRAP entity by the relay UE may be performed under the following conditions:
The second terminal equipment (relay UE) no longer has PC5 connection with the first terminal equipment (remote UE).

Embodiments of the second aspect of the present disclosure specify the relevant operations of the remote UE and the relay UE on the PC5 SRAP entity and/or SL SRAP entity, which helps the remote UE and the relay UE correctly use SRAP functions and configurations for messaging, and ensures that the network device correctly identifies the remote UE and its radio bearer.

### Embodiments of a third aspect

Embodiments of a third aspect provide an apparatus for transceiving information. The apparatus is applicable to a first terminal equipment, such as the remote UE 101 in FIG. 1. The function of the apparatus for transceiving information corresponds to the operations of the first terminal equipment in the method for transceiving information in the embodiments of the first aspect.

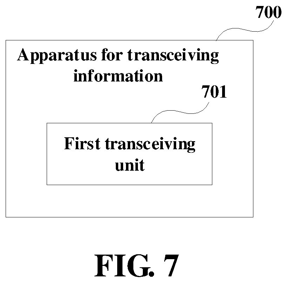

FIG. 7 is a schematic diagram of an apparatus for transceiving information described in the embodiments of a third aspect. As shown in FIG. 7, an apparatus 700 for transceiving information includes a first transceiving unit 701 configured to:
establish PC5 connection with a second terminal equipment (a relay UE); and
receive at least one of a radio resource control resume (RRC resume) message, a radio resource control re-establishment (RRC re-establishment) message or a radio resource control reconfiguration (RRC reconfiguration) message via the second terminal equipment (the relay UE) by means of default configuration.

In at least one embodiment, the default configuration includes default sidelink radio link control bearer configuration (sidelink RLC bearer configuration) and/or default sidelink relay adaptation protocol (SRAP)-related configuration.

The default sidelink radio link control bearer configuration is sidelink radio link control 0 (SL-RLC0) default configuration or sidelink radio link control 1 (SL-RLC1) default configuration.

The default SRAP-related configuration includes at least one of the following: a local or temporary identifier of the first terminal equipment (the remote UE), an added mapping list or a deleted mapping list.

The default SRAP-related configuration includes default SRAP configuration of signaling radio bearer 0 (SRBO) and/or default SRAP configuration of signaling radio bearer 1 (SRB1).

In at least one embodiment, the first transceiving unit 701 receives a signaling radio bearer 1 (SRB1) message by using a sidelink radio link control bearer configuration 1 (SL-RLC1) at a PC5 interface between the first terminal equipment (remote UE) and the second terminal equipment (relay UE), the SRB1 message bears the radio resource control resume (RRC resume) message and/or the radio resource control re-establishment (RRC re-establishment) message, or the SRB 1 message is a first SRB 1 message to be received by the first terminal equipment (the remote UE) after the signaling radio bearer 0 (SRBO) message of the first terminal equipment (the remote UE) is transmitted to a network device.

In at least one embodiment, the first transceiving unit 701 is further configured to:
use the SRB1 default SRAP configuration and/or use the SL-RLC1 default configuration for SRB 1 when the first terminal equipment (the remote UE) transmits a radio resource control re-establishment request (RRC re-establishment request) message or a radio resource control resume (RRC resume request) message or when the first terminal equipment (the remote UE) initiates a radio resource control re-establishment procedure or a radio resource control resume procedure.

For example, the radio resource control resume (RRC resume) message or the radio resource control re-establishment (RRC re-establishment) message does not include sidelink relay adaptation protocol (SRAP)-related configuration. The first transceiving unit 701 transmits a radio resource control resume complete (RRC resume complete) message and/or a radio resource control re-establishment complete (RRC re-establishment complete) message by using the SRB1 default SRAP configuration and/or the SL-RLC1 default configuration at the PC5 interface between the first terminal equipment (the remote UE) and the second terminal equipment (the relay UE).

For another example, the radio resource control resume (RRC resume) message or the radio resource control re-establishment (RRC re-establishment) message includes sidelink relay adaptation protocol (SRAP)-related configuration. The first transceiving unit 701 transmits the radio resource control resume complete (RRC resume complete) message and/or the radio resource control re-establishment complete (RRC re-establishment complete) message by using the SRAP-related configuration.

In at least one another embodiment, the first transceiving unit receives the radio resource control resume (RRC resume) message and/or the radio resource control re-establishment (RRC re-establishment) message by using the SRB0 default SRAP configuration and/or a sidelink radio link control bearer configuration 0 (SL-RLC0) at the PC5 interface between the first terminal equipment (the remote UE) and the second terminal equipment (the relay UE).

In one instance, the radio resource control resume (RRC resume) message or the radio resource control re-establishment (RRC re-establishment) message does not include sidelink relay adaptation protocol (SRAP)-related configuration.

The first transceiving unit 701 transmits a radio resource control resume complete (RRC resume complete) message and/or a radio resource control re-establishment complete (RRC re-establishment complete) message by using the SRB0 default SRAP configuration and/or the SL-RLCO default configuration at the PC5 interface between the first terminal equipment (the remote UE) and the second terminal equipment (the relay UE).

The first transceiving unit 701 is further configured to: receive a radio resource control reconfiguration (RRC reconfiguration) message by using the SRB0 default SRAP configuration and/or the SL-RLCO default configuration at the PC5 interface between the first terminal equipment (the remote UE) and the second terminal equipment (the relay UE).

In another instance, the radio resource control resume (RRC resume) message or the radio resource control re-establishment (RRC re-establishment) message includes sidelink relay adaptation protocol (SRAP)-related configuration.

The first transceiving unit 701 applies the SRAP-related configuration, and the first transceiving unit 701 transmits a radio resource control resume complete (RRC resume complete) message and/or a radio resource control re-establishment complete (RRC re-establishment complete) message at the PC5 interface between the first terminal equipment (the remote UE) and the second terminal equipment (the relay UE).

### Embodiments of a fourth aspect

Embodiments of a fourth aspect provide an apparatus for transceiving information. The apparatus is applicable to a second terminal equipment, such as the relay UE 102 in FIG. 1. The function of the apparatus for transceiving information corresponds to the method for the relay UE in the embodiments of the first aspect.

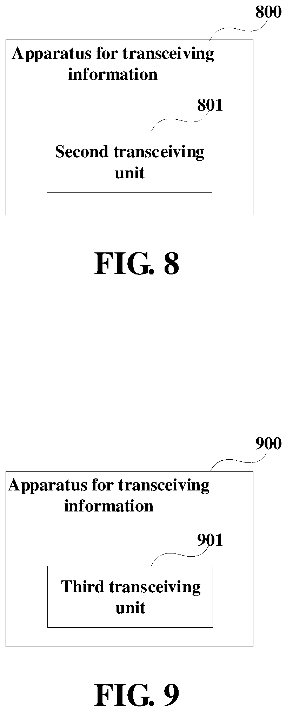

FIG. 8 is a schematic diagram of an apparatus for transceiving information described in the embodiments of a fourth aspect. As shown in FIG. 8, an apparatus 800 for transceiving information includes a second transceiving unit 801 configured to:
establish PC5 connection with a first terminal equipment (a remote UE); and
transmit to the first terminal equipment (the remote UE) at least one of a radio resource control resume (RRC resume) message, a radio resource control re-establishment (RRC re-establishment) message or a radio resource control reconfiguration (RRC reconfiguration) message by means of default configuration, for example the second transceiving unit 801 forwards the radio resource control resume (RRC resume) message, the radio resource control re-establishment (RRC re-establishment) message and a radio resource control reconfiguration (RRC reconfiguration) message which are transmitted by a network device, to the first terminal equipment.

In at least one embodiment, the default configuration includes default sidelink radio link control bearer configuration (sidelink RLC bearer configuration) and/or default sidelink relay adaptation protocol (SRAP)-related configuration.

The default sidelink radio link control bearer configuration is sidelink radio link control 0 (SL-RLC0) default configuration or sidelink radio link control 1 (SL-RLC1) default configuration.

The default SRAP-related configuration includes at least one of the following: a local or temporary identifier of the first terminal equipment (the remote UE), an added mapping list or a deleted mapping list.

The default SRAP-related configuration includes default SRAP configuration of signaling radio bearer 0 (SRBO) and/or default SRAP configuration of signaling radio bearer 1 (SRB 1).

In at least one embodiment, the second transceiving unit 801 transmits a signaling radio bearer 1 (SRB1) message by using sidelink radio link control bearer configuration 1 (SL-RLC1) at the PC5 interface between the second terminal equipment (relay UE) and the first terminal equipment (remote UE). The SRB1 message bears the radio resource control resume (RRC resume) message and/or the radio resource control re-establishment (RRC re-establishment) message, or the SRB 1 message is a first SRB 1 message transmitted by the second terminal equipment (the relay UE) to the first terminal equipment after the first terminal equipment (the remote UE) transmits the signaling radio bearer 0 (SRBO) message to a network device.

In one instance, the radio resource control resume (RRC resume) message or the radio resource control re-establishment (RRC re-establishment) message does not include sidelink relay adaptation protocol (SRAP)-related configuration.

For example, the second transceiving unit 801 receives a radio resource control resume complete (RRC resume complete) message and/or a radio resource control re-establishment complete (RRC re-establishment complete) message as transmitted by the first terminal equipment, by using SRB 1 default SRAP configuration and/or SL-RLC1 default configuration at the PC5 interface between the second terminal equipment (the relay UE) and the first terminal equipment (the remote UE).

In another instance, the radio resource control resume (RRC resume) message or the radio resource control re-establishment (RRC re-establishment) message includes sidelink relay adaptation protocol (SRAP)-related configuration. In addition, the second transceiving unit 801 may receive the radio resource control resume complete (RRC resume complete) message and/or the radio resource control re-establishment complete (RRC re-establishment complete) message as transmitted by the first terminal equipment, based on the SRAP-related configuration.

In at least some other embodiments, the second transceiving unit 801 transmits the radio resource control resume (RRC resume) message and/or the radio resource control re-establishment (RRC re-establishment) message by using SRB0 default SRAP configuration and/or SL-RLCO default configuration at the PC5 interface between the second terminal equipment (the relay UE) and the first terminal equipment (the remote UE).

In one instance, the radio resource control resume (RRC resume) message or the radio resource control re-establishment (RRC re-establishment) message does not include sidelink relay adaptation protocol (SRAP)-related configuration.

The second transceiving unit 801 receives a radio resource control resume complete (RRC resume complete) message and/or a radio resource control re-establishment complete (RRC re-establishment complete) message by using the SRB0 default SRAP configuration and/or the SL-RLCO default configuration at the PC5 interface between the second terminal equipment (the relay UE) and the first terminal equipment (the remote UE).

The second transceiving unit is further configured to: transmit a radio resource control reconfiguration (RRC reconfiguration) message by using the SRB0 default SRAP configuration and/or SL-RLCO default configuration at the PC5 interface between the second terminal equipment (the relay UE) and the first terminal equipment (the remote UE).

In another instance, the radio resource control resume (RRC resume) message or the radio resource control re-establishment (RRC re-establishment) message includes sidelink relay adaptation protocol (SRAP)-related configuration.

The second transceiving unit 801 receives a radio resource control resume complete (RRC resume complete) message and/or a radio resource control re-establishment complete (RRC re-establishment complete) message at the PC5 interface between the second terminal equipment (the relay UE) and the first terminal equipment (the remote UE).

### Embodiments of a fifth aspect

Embodiments of a fifth aspect provide an apparatus for transceiving information. The apparatus is applicable to a first terminal equipment, such as the remote UE 101 in FIG. 1. The function of the apparatus for transceiving information corresponds to the method for the remote UE in the embodiments of the first aspect.

FIG. 9 is a schematic diagram of an apparatus for transceiving information described in the embodiments of a fifth aspect. As shown in FIG. 9, an apparatus 900 for transceiving information includes a third transceiving unit 901 configured to:
establish PC5 connection with a second terminal equipment (a relay UE); and
receive at least one of a radio resource control setup (RRC setup) message, a radio resource control resume (RRC resume) message or a radio resource control re-establishment (RRC re-establishment) message via the second terminal equipment (the relay UE), at least one of the RRC setup message, the RRC resume message or the RRC re-establishment message including sidelink relay adaptation protocol (SRAP)-related configuration.

After receiving the SRAP-related configuration in the RRC setup message, the third transceiving unit 801 enables the first terminal equipment (the remote UE) to perform at least one of the following operations:
establishing an SRAP entity;
configuring parameters of the SRAP entity according to the SRAP-related configuration;
applying a terminal equipment identifier in the RRC setup message as a cell radio network temporary identifier (C-RNTI) of the first terminal equipment (the remote UE); or
transmitting a radio resource control setup complete (RRC setup complete) message based on the SRAP-related configuration.

In addition, the third transceiving unit 901 may also have the function of the first transceiving unit 701, that is, the function of the first transceiving unit 701 can be integrated into the third transceiving unit 901, so that the third transceiving unit 901 has the function of the first transceiving unit 701.

### Embodiments of a sixth aspect

Embodiments of a sixth aspect provide an apparatus for transceiving information. The apparatus is applicable to a second terminal equipment, such as the relay UE 102 in FIG. 1. The function of the apparatus for transceiving information corresponds to the method for the second terminal equipment in the embodiments of the first aspect.

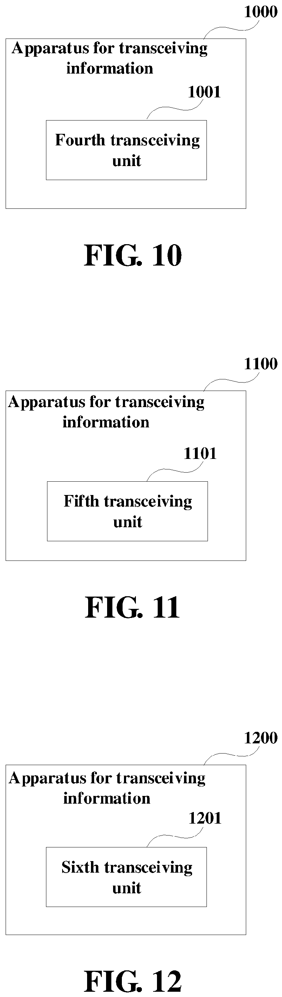

FIG. 10 is a schematic diagram of an apparatus for transceiving information described in the embodiments of a sixth aspect. As shown in FIG. 10, an apparatus 1000 for transceiving information includes a fourth transceiving unit 1001 configured to:
establish PC5 connection with a first terminal equipment (a remote UE); and
transmit to the first terminal equipment (the remote UE) at least one of a radio resource control setup (RRC setup) message, a radio resource control resume (RRC resume) message or a radio resource control re-establishment (RRC re-establishment) message, wherein at least one of the RRC setup message, the RRC resume message or the RRC re-establishment message includes sidelink relay adaptation protocol (SRAP)-related configuration.

The fourth transceiving unit 1001 forwards a radio resource control setup (RRC setup) message, a radio resource control resume (RRC resume) message, a radio resource control re-establishment (RRC re-establishment) message and a radio resource control reconfiguration (RRC reconfiguration) message which are transmitted by a network device, to the first terminal equipment.

The fourth transceiving unit 1001 is further configured to: receive a radio resource control setup complete (RRC setup complete) message from the first terminal equipment based on the SRAP-related configuration.

In addition, the fourth transceiving unit 1001 may also have the function of the second transceiving unit 801, that is, the function of the second transceiving unit 801 can be integrated into the fourth transceiving unit 1001, so that the fourth transceiving unit 1001 has the function of the second transceiving unit 801.

### Embodiments of a seventh aspect

Embodiments of a seventh aspect provide an apparatus for transceiving information. The apparatus is appliable to a network device, such as the network device 100 in FIG. 1. The function of the apparatus for transceiving information corresponds to the method for the network device in the embodiments of the first aspect.

FIG. 11 is a schematic diagram of an apparatus for transceiving information described in the embodiments of a seventh aspect. As shown in FIG. 11, an apparatus 1100 for transceiving information includes a fifth transceiving unit 1101 configured to:
transmit to a second terminal equipment (relay UE) at least one of a radio resource control setup (RRC setup) message, a radio resource control resume (RRC resume) message or a radio resource control re-establishment (RRC re-establishment) message used for a first terminal equipment (remote UE), wherein at least one of the RRC setup message, the RRC resume message or the RRC re-establishment message includes sidelink relay adaptation protocol (SRAP)-related configuration.

### Embodiments of an eighth aspect

Embodiments of an eighth aspect provide an apparatus for transceiving information. The apparatus is applicable to a first terminal equipment, such as the remote UE 101 in FIG. 1. The function of the apparatus for transceiving information corresponds to the method for the remote UE in the embodiments of the second aspect.

FIG. 12 is a schematic diagram of an apparatus for transceiving information described in the embodiments of an eighth aspect. As shown in FIG. 12, an apparatus 1200 for transceiving information includes a sixth transceiving unit 1201 configured to:
perform establishment of a relay adaptation protocol (SRAP) (PC5 SRAP or SL SRAP) entity in at least one of the following procedures:
a first terminal equipment (remote UE) selects or reselect a second terminal equipment (relay UE);
the first terminal equipment (remote UE) initiates an RRC connection establishment procedure and/or an RRC re-establishment procedure and/or an RRC resume procedure via the second terminal equipment (relay UE);
the first terminal equipment (remote UE) transmits an RRC setup request and/or an RRC re-establishment request and/or an RRC resume request via the second terminal equipment (relay UE);
the first terminal equipment (remote UE) receives RRC setup and/or RRC re-establishment and/or RRC resume and/or RRC reconfiguration message(s) via the second terminal equipment (relay UE); or
the first terminal equipment (remote UE) receives from a gNB an RRC reconfiguration message from a path switch to the second terminal equipment (relay UE) (direct-to-indirect path switch),
and/or, perform configuration, reconfiguration or modification of a SRAP (PC5 SRAP or SL SRAP) entity in at least one of the following procedures:
   the first terminal equipment (remote UE) uses default SRAP-related configuration; or
   the first terminal equipment (remote UE) receives RRC setup and/or RRC re-establishment and/or RRC resume and/or RRC reconfiguration message(s) that include(s) SRAP-related configuration,
   and/or, perform release of a SRAP (PC5 SRAP or SL SRAP) entity in at least one of the following procedures:
      the first terminal equipment (remote UE) switches from communication with the gNB via relay to direct communication with the gNB (indirect-to-direct path switch);
      PC5 connection (such as PC5-RRC connection or PC5 unicast link) between the first terminal equipment (remote UE) and the second terminal equipment (relay UE) is released; or
      the first terminal equipment (remote UE) enters a radio resource control idle (RRC _Idle) or radio resource control inactive (RRC _Inactive) state.

### Embodiments of a ninth aspect

Embodiments of a ninth aspect provide an apparatus for transceiving information. The apparatus is applicable to a second terminal equipment, such as the relay UE 102 in FIG. 1. The function of the apparatus for transceiving information corresponds to the method for the relay UE in the embodiments of the second aspect.

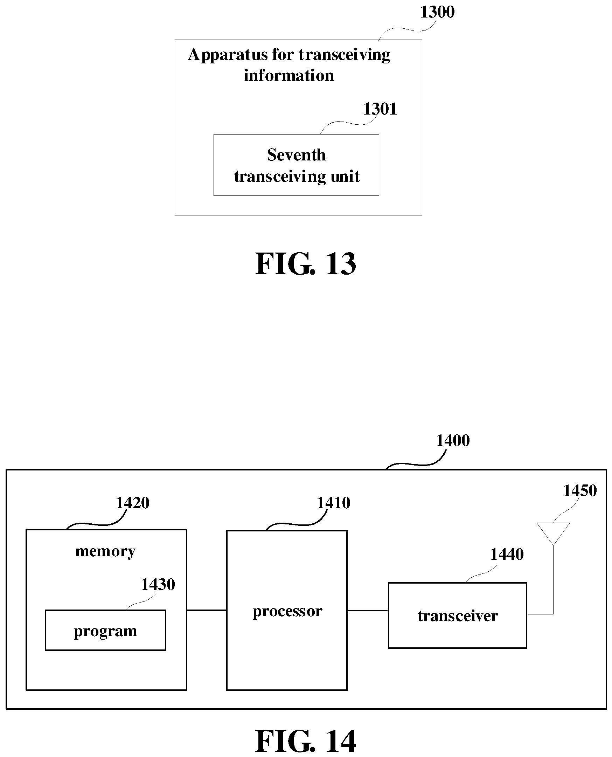

FIG. 13 is a schematic diagram of an apparatus for transceiving information described in the embodiments of a ninth aspect. As shown in FIG. 12, an apparatus 1300 for transceiving information includes a seventh transceiving unit 1301 configured to:
perform establishment of a SRAP (PC5 SRAP or SL SRAP) entity in at least one of the following procedures:
being authorized and/or authenticated as a second terminal equipment (relay UE); establishing PC5 connection with a first terminal equipment (remote UE); (for example, establishing PC5 connection with the 1st first terminal equipment (remote UE));
receiving an RRC setup request and/or an RRC re-establishment request and/or an RRC resume request transmitted by the first terminal equipment (remote UE); or
receiving SL SRAP-related configuration included in an RRC setup and/or RRC re-establishment and/or RRC resume and/or RRC reconfiguration message(s) transmitted by the gNB,
and/or, perform configuration, reconfiguration or modification of a PC5 SRAP or SL SRAP entity under the following conditions:
   receiving SL SRAP-related configuration included in an RRC setup and/or RRC re-establishment and/or RRC resume and/or RRC reconfiguration message(s) transmitted by the gNB,
   and/or, perform release of a PC5 SRAP or SL SRAP entity in at least one of the following procedures:
      the first terminal equipment (remote UE) switches from communication with a network device via the second terminal equipment to direct communication with the network device (indirect-to-direct path switch);
      PC5 connection (such as PC5-RRC connection or PC5 unicast link) between the first terminal equipment (remote UE) and the second terminal equipment (relay UE) is released; or
      there is no PC5 connection between the first terminal equipment (remote UE) and the second terminal equipment (relay UE),
      and/or, perform establishment of a Uu SRAP entity in at least one of the following procedures:
         being authorized and/or authenticated as a second terminal equipment (relay UE);
         establish PC5 connection with a first terminal equipment (a remote UE); or
         receiving Uu SRAP-related configuration included in an RRC setup and/or RRC re-establishment and/or RRC resume and/or RRC reconfiguration message(s) transmitted by the gNB,
         and/or, perform configuration, reconfiguration or modification of a Uu SRAP entity under the following conditions:
            receiving SL SRAP-related configuration included in an RRC setup and/or RRC re-establishment and/or RRC resume and/or RRC reconfiguration message(s) transmitted by the gNB,
            and/or, perform release of a Uu SRAP entity under the following conditions:
               the second terminal equipment (relay UE) no longer has PC5 connection with the first terminal equipment (remote UE).

### Embodiments of a tenth aspect

The embodiments of the present disclosure further provide a communication system which may include a first terminal equipment, a second terminal equipment and a network device, for example the first terminal equipment may be remote UE 101 in FIG. 1, the second terminal equipment may be relay UE 102 in FIG. 1, and the network device may be network device 100 in FIG. 1. The first terminal equipment and the second terminal equipment may adopt a similar terminal equipment structure.

FIG. 14 is a schematic diagram of a terminal equipment in a communication system in the embodiments of a tenth aspect. The terminal equipment as shown in FIG. 14 may be used for the first terminal equipment, or may also be used for the second terminal equipment.

As shown in FIG. 14, a terminal equipment 1400 may include: a processor 1410 (such as a central processing unit (CPU)) and a memory 1420; the memory 1420 is coupled to the processor 1410. The memory 1420 can store various data; moreover, also stores a program 1430 for information processing, and executes the program 1430 under the control of the processor 1410.

For example, the processor 1410 may be configured to execute a program to implement the method described in the embodiments of the first aspect or the second aspect.

In addition, as shown in FIG. 14, the terminal equipment 1400 may further include: a transceiver 1440 and an antenna 1450, etc., wherein the functions of said components are similar to relevant arts, which are not repeated here. It's worth noting that the terminal equipment 1400 does not have to include all the components shown in FIG. 14. Moreover, the terminal equipment 1400 may also include components not shown in FIG. 14, related arts may be referred to.

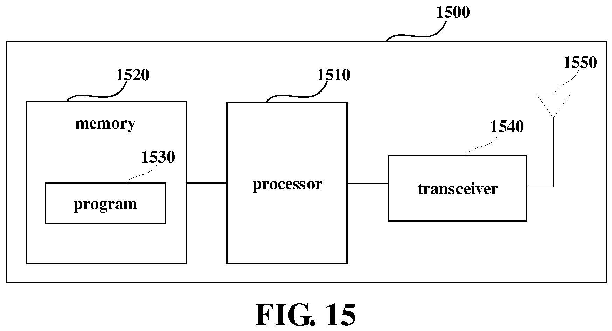

FIG. 15 is a schematic diagram of a network device in a communication system in the embodiments of a tenth aspect.

As shown in FIG. 15, a network device 1500 may include: a processor 1510 (such as a central processing unit (CPU)) and a memory 1520; the memory 1520 is coupled to the processor 1510. The memory 1520 can store various data; moreover, also stores a program 1530 for information processing, and executes the program 1530 under the control of the processor 1510.

For example, the processor 1510 may be configured to execute a program to implement the method described in the embodiments of the first aspect or the second aspect.

In addition, as shown in FIG. 15, the network device 1500 may further include: a transceiver 1540 and an antenna 1550, etc., wherein the functions of said components are similar to relevant arts, which are not repeated here. It's worth noting that the network device 1500 does not have to include all the components shown in FIG. 15. Moreover, the network device 1500 may also include components not shown in FIG. 15, relevant arts can be referred to.

The embodiments of the present disclosure further provide a computer program, wherein when the program is executed in a first terminal equipment or a second terminal equipment, the program enables the first terminal equipment or the second terminal equipment to execute the method described in the embodiments of the first and second aspects.

The embodiments of the present disclosure further provide a storage medium in which a computer program is stored, wherein the computer program enables the first terminal equipment or the second terminal equipment to execute the method described in the embodiments of the first and second aspects.

The embodiments of the present disclosure further provide a computer program, wherein when a network device executes the program, the program enables the network device to execute the method described in the embodiments of the first and second aspects.

The embodiments of the present disclosure further provide a storage medium in which a computer program is stored, wherein the computer program enables a network device to execute the method described in the embodiments of the first and second aspects.

The apparatus and method in the present disclosure can be realized by hardware, or can be realized by combining hardware with software. The present disclosure relates to such a computer readable program, when the program is executed by a logic component, the computer readable program enables the logic component to realize the apparatus described in the above text or a constituent component, or enables the logic component to realize various methods or steps described in the above text. The present disclosure also relates to a storage medium storing the program, such as a hard disk, a magnetic disk, an optical disk, a DVD, a flash memory and the like.

By combining with the method/apparatus described in the embodiments of the present disclosure, it can be directly reflected as hardware, a software executed by a processor, or a combination of the two. For example, one or more in the functional block diagram and/or one or more combinations in the functional block diagram as shown in the drawings may correspond to software modules of a computer program flow, and may also correspond to hardware modules. These software modules may respectively correspond to the steps as shown in the drawings. These hardware modules can be realized by solidifying these software modules e.g. using a field-programmable gate array (FPGA).

A software module can be located in a RAM memory, a flash memory, a ROM memory, an EPROM memory, an EEPROM memory, a register, a hard disk, a mobile magnetic disk, a CD-ROM or a storage medium in any other form as known in this field. A storage medium can be coupled to a processor, thereby enabling the processor to read information from the storage medium, and to write the information into the storage medium; or the storage medium can be a constituent part of the processor. The processor and the storage medium can be located in an ASIC. The software module can be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module can be stored in the MEGA-SIM card or the flash memory apparatus with a large capacity.

One or more in the functional block diagram and/or one or more combinations in the functional block diagram as described in the drawings can be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram and/or one or more combinations in the functional block diagram as described in the drawings can be also implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art can make various variations and modifications to the present disclosure based on the spirit and principle of the present disclosure, these variations and modifications are also within the scope of the present disclosure.

As for the implementations including the above embodiments, the following supplements are further disclosed:
1. A method for transceiving information, applicable to a first terminal equipment (a remote UE), the method including:
   establishing, by the first terminal equipment (the remote UE), PC5 connection with a second terminal equipment (a relay UE); and
   receiving, by the first terminal equipment (the remote UE), at least one of a radio resource control resume (RRC resume) message, a radio resource control re-establishment (RRC re-establishment) message or a radio resource control reconfiguration (RRC reconfiguration) message via the second terminal equipment (the relay UE) by means of default configuration.
2. The apparatus according to Supplement 1, wherein,
   the default configuration includes default sidelink radio link control bearer configuration (sidelink RLC bearer configuration) and/or default sidelink relay adaptation protocol (SRAP)-related configuration.
3. The apparatus according to Supplement 2, wherein,
   the default sidelink radio link control bearer configuration is sidelink radio link control 0 (SL-RLC0) default configuration or sidelink radio link control 1 (SL-RLC1) default configuration.
4. The apparatus according to Supplement 2, wherein,
   the default SRAP-related configuration includes at least one of the following: a local or temporary identifier of the first terminal equipment (the remote UE), an added mapping list or a deleted mapping list.
5. The apparatus according to Supplement 2, wherein,
   the default SRAP-related configuration includes default SRAP configuration of signaling radio bearer 0 (SRBO) and/or default SRAP configuration of signaling radio bearer 1 (SRB 1).
6. The method according to Supplement 1, wherein,
   the first terminal equipment (the remote UE) receives a signaling radio bearer 1 (SRB1) message by using default SRAP configuration of SRB 1 and/or SL-RLC1 default configuration at a PC5 interface with the second terminal equipment (the relay UE).
7. The method according to Supplement 6, wherein,
   the SRB 1 message bears the radio resource control resume (RRC resume) message and/or the radio resource control re-establishment (RRC re-establishment) message, or the SRB 1 message is a first SRB 1 message to be received by the first terminal equipment (the remote UE) after the signaling radio bearer 0 (SRBO) message of the first terminal equipment (the remote UE) is transmitted to a network device.
8. The method according to Supplement 6, wherein the method further includes:
   the first terminal equipment (the remote UE) uses the SRB1 default SRAP configuration and/or use the SL-RLC1 default configuration for SRB 1 when the first terminal equipment (the remote UE) transmits a radio resource control re-establishment request (RRC re-establishment request) message or a radio resource control resume (RRC resume request) message or when the first terminal equipment (the remote UE) initiates a radio resource control re-establishment procedure or a radio resource control resume procedure.
9. The method according to Supplement 6, wherein,
   the radio resource control resume (RRC resume) message or the radio resource control re-establishment (RRC re-establishment) message does not include sidelink relay adaptation protocol (SRAP)-related configuration.
10. The method according to Supplement 9, wherein,
   the first terminal equipment (the remote UE) transmits a radio resource control resume complete (RRC resume complete) message and/or a radio resource control re-establishment complete (RRC re-establishment complete) message by using the SRB 1 default SRAP configuration and/or the SL-RLC1 default configuration at the PC5 interface with the second terminal equipment (the relay UE).
11. The method according to Supplement 6, wherein,
   the radio resource control resume (RRC resume) message or the radio resource control re-establishment (RRC re-establishment) message includes sidelink relay adaptation protocol (SRAP)-related configuration.
12. The method according to Supplement 11, wherein,
   the first terminal equipment (the remote UE) transmits the radio resource control resume complete (RRC resume complete) message and/or the radio resource control re-establishment complete (RRC re-establishment complete) message by using the SRAP-related configuration.
13. The method according to Supplement 1, wherein,
   the first terminal equipment (the remote UE) receives a radio resource control resume (RRC resume) message and/or a radio resource control re-establishment (RRC re-establishment) message by using SRB0 default SRAP configuration and/or SL-RLC0 default configuration at the PC5 interface with the second terminal equipment (the relay UE).
14. The method according to Supplement 13, wherein,
   the radio resource control resume (RRC resume) message or the radio resource control re-establishment (RRC re-establishment) message does not include sidelink relay adaptation protocol (SRAP)-related configuration.
15. The method according to Supplement 14, wherein,
   the first terminal equipment (the remote UE) transmits a radio resource control resume complete (RRC resume complete) message and/or a radio resource control re-establishment complete (RRC re-establishment complete) message by using the SRB0 default SRAP configuration and/or the SL-RLCO default configuration at the PC5 interface with the second terminal equipment (the relay UE).
16. The method according to Supplement 14, wherein the method further includes:
   the first terminal equipment (the remote UE) receives a radio resource control reconfiguration (RRC reconfiguration) message by using SRB0 default SRAP configuration and/or SL-RLCO default configuration at the PC5 interface with the second terminal equipment (the relay UE).
17. The method according to Supplement 13, wherein,
   the radio resource control resume (RRC resume) message or the radio resource control re-establishment (RRC re-establishment) message includes sidelink relay adaptation protocol (SRAP)-related configuration.
18. The method according to Supplement 17, wherein,
   the first terminal equipment (the remote UE) applies the SRAP-related configuration, and the first terminal equipment (the remote UE) transmits a radio resource control resume complete (RRC resume complete) message and/or a radio resource control re-establishment complete (RRC re-establishment complete) message at the PC5 interface with the second terminal equipment (the relay UE).
19. A method for transceiving information, applicable to a second terminal equipment (a relay UE), the method including:
   establishing, by the second terminal equipment (the relay UE), PC5 connection with a first terminal equipment (a remote UE); and
   transmitting, by the second terminal equipment (the relay UE), to the first terminal equipment (the remote UE) at least one of a radio resource control resume (RRC resume) message, a radio resource control re-establishment (RRC re-establishment) message or a radio resource control reconfiguration (RRC reconfiguration) message by means of default configuration.
20. The apparatus according to claim 19, wherein,
   the default configuration includes default sidelink radio link control bearer configuration (sidelink RLC bearer configuration) and/or default sidelink relay adaptation protocol (SRAP)-related configuration.
21. The apparatus according to claim 20, wherein,
   the default sidelink radio link control bearer configuration is sidelink radio link control 0 (SL-RLC0) default configuration or sidelink radio link control 1 (SL-RLC1) default configuration.
22. The apparatus according to claim 20, wherein,
   the default SRAP-related configuration includes at least one of the following: a local/temporary identifier of the first terminal equipment (the remote UE), an added mapping list or a deleted mapping list.
23. The apparatus according to claim 20, wherein,
   the default SRAP-related configuration includes default SRAP configuration of signaling radio bearer 0 (SRBO) and/or default SRAP configuration of signaling radio bearer 1 (SRB1).
24. The method according to Supplement 19, wherein,
   the second terminal equipment forwards the radio resource control setup (RRC setup) message, a radio resource control resume (RRC resume) message, the radio resource control re-establishment (RRC re-establishment) message and the radio resource control reconfiguration (RRC reconfiguration) message which are transmitted by a network device, to the first terminal equipment.
25. The method according to Supplement 19, wherein,
   the second terminal equipment (the relay UE) transmits a signaling radio bearer 1 (SRB1) message by using the default SRAP configuration of SRB1 and/or the SL-RLC1 default configuration at the PC5 interface with the first terminal equipment (the remote UE).
26. The method according to Supplement 25, wherein,
   the SRB1 message bears the radio resource control resume (RRC resume) message and/or the radio resource control re-establishment (RRC re-establishment) message, or the SRB1 message is a first SRB1 message transmitted by the second terminal equipment (the relay UE) to the first terminal equipment after the first terminal equipment (the remote UE) transmits the signaling radio bearer 0 (SRBO) message to a network device.
27. The method according to Supplement 25, wherein,
   the radio resource control resume (RRC resume) message or the radio resource control re-establishment (RRC re-establishment) message does not include sidelink relay adaptation protocol (SRAP)-related configuration.
28. The method according to Supplement 27, wherein,
   the second terminal equipment (the relay UE) receives a radio resource control resume complete (RRC resume complete) message and/or a radio resource control re-establishment complete (RRC re-establishment complete) message as transmitted by the first terminal equipment, by using SRB1 default SRAP configuration and/or SL-RLC1 default configuration at the PC5 interface with the first terminal equipment (the remote UE).
29. The method according to Supplement 25, wherein,
   the radio resource control resume (RRC resume) message or the radio resource control re-establishment (RRC re-establishment) message includes sidelink relay adaptation protocol (SRAP)-related configuration.
30. The method according to Supplement 29, wherein,
   the second terminal equipment (the relay UE) receives the radio resource control resume complete (RRC resume complete) message and/or the radio resource control re-establishment complete (RRC re-establishment complete) message as transmitted by the first terminal equipment, based on the SRAP-related configuration.
31. The method according to Supplement 19, wherein,
   the second terminal equipment (the relay UE) transmits the radio resource control resume (RRC resume) message and/or the radio resource control re-establishment (RRC re-establishment) message by using SRB0 default SRAP configuration and/or SL-RLCO default configuration at the PC5 interface with the first terminal equipment (the remote UE).
32. The method according to Supplement 31, wherein,
   the radio resource control resume (RRC resume) message or the radio resource control re-establishment (RRC re-establishment) message does not include sidelink relay adaptation protocol (SRAP)-related configuration.
33. The method according to Supplement 32, wherein,
   the second terminal equipment (the relay UE) receives a radio resource control resume complete (RRC resume complete) message and/or a radio resource control re-establishment complete (RRC re-establishment complete) message by using the SRB0 default SRAP configuration and/or the SL-RLCO default configuration at the PC5 interface with the first terminal equipment (the remote UE).
34. The method according to Supplement 32, wherein the method further includes:
   the second terminal equipment (the relay UE) transmits a radio resource control reconfiguration (RRC reconfiguration) message by using the SRB0 default SRAP configuration and/or SL-RLCO default configuration at the PC5 interface with the first terminal equipment (the remote UE).
35. The method according to Supplement 31, wherein,
   the radio resource control resume (RRC resume) message or the radio resource control re-establishment (RRC re-establishment) message includes sidelink relay adaptation protocol (SRAP)-related configuration.
36. The method according to Supplement 35, wherein,
   the second terminal equipment (the relay UE) receives a radio resource control resume complete (RRC resume complete) message and/or a radio resource control re-establishment complete (RRC re-establishment complete) message at the PC5 interface with the first terminal equipment (the remote UE).
37. A method for transceiving information, applicable to a first terminal equipment (a remote UE), the method including:
   establishing, by the first terminal equipment (the remote UE), PC5 connection with a second terminal equipment (a relay UE); and
   receiving, by the first terminal equipment (the remote UE), at least one of a radio resource control setup (RRC setup) message, a radio resource control resume (RRC resume) message or a radio resource control re-establishment (RRC re-establishment) message via the second terminal equipment (the relay UE),
   at least one of the RRC setup message, the RRC resume message or the RRC re-establishment message including sidelink relay adaptation protocol (SRAP)-related configuration.
38. The method according to Supplement 37, wherein,
   after receiving the SRAP-related configuration in the RRC setup message, the first terminal equipment (the remote UE) performs at least one of the following operations:
   establishing an SRAP entity;
   configuring parameters of the SRAP entity according to the SRAP-related configuration;
   applying a terminal equipment identifier in the RRC setup message as a cell radio network temporary identifier (C-RNTI) of the first terminal equipment (the remote UE); or
   transmitting a radio resource control setup complete (RRC setup complete) message based on the SRAP-related configuration.
39. A method for transceiving information, applicable to a second terminal equipment (a relay UE), the method including:
   establishing, by the second terminal equipment (the relay UE), PC5 connection with a first terminal equipment (a remote UE); and
   transmitting, by the second terminal equipment (the relay UE), to the first terminal equipment (the remote UE) at least one of a radio resource control setup (RRC setup) message, a radio resource control resume (RRC resume) message or a radio resource control re-establishment (RRC re-establishment) message,
   at least one of the RRC setup message, the RRC resume message or the RRC re-establishment message including sidelink relay adaptation protocol (SRAP)-related configuration.
40. The method according to Supplement 39, wherein,
   the second terminal equipment forwards the radio resource control setup (RRC setup) message, a radio resource control resume (RRC resume) message, the radio resource control re-establishment (RRC re-establishment) message and the radio resource control reconfiguration (RRC reconfiguration) message which are transmitted by a network device, to the first terminal equipment.
41. The method according to Supplement 39, wherein the method further includes:
   the second terminal equipment (the relay UE) receives a radio resource control setup complete (RRC setup complete) message from the first terminal equipment based on the SRAP-related configuration.
42. A method for transceiving information, applicable to a network device, the method including:
   transmitting, by the network device, to the second terminal equipment (the relay UE)at least one of a radio resource control setup (RRC setup) message, a radio resource control resume (RRC resume) message or a radio resource control re-establishment (RRC re-establishment) message used for the first terminal equipment (the remote UE),
   at least one of the RRC setup message, the RRC resume message or the RRC re-establishment message including sidelink relay adaptation protocol (SRAP)-related configuration.
43. A method for transceiving information, applicable to a first terminal equipment (a remote UE), the method including:
   performing establishment of a relay adaptation protocol (SRAP) entity (PC5 SRAP or SL SRAP) in at least one of the following procedures:
   a first terminal equipment (remote UE) selects or reselect a second terminal equipment (relay UE);
   the first terminal equipment (remote UE) initiates an RRC connection establishment procedure and/or an RRC re-establishment procedure and/or an RRC resume procedure via the second terminal equipment (relay UE);
   the first terminal equipment (remote UE) transmits an RRC setup request and/or an RRC re-establishment request and/or an RRC resume request via the second terminal equipment (relay UE);
   the first terminal equipment (remote UE) receives RRC setup and/or RRC re-establishment and/or RRC resume and/or RRC reconfiguration message(s) via the second terminal equipment (relay UE); or
   the first terminal equipment (remote UE) receives from a gNB an RRC reconfiguration message from a path switch to the second terminal equipment (relay UE) (direct-to-indirect path switch),
   and/or, performing configuration, reconfiguration or modification of a SRAP entity (PC5 SRAP or SL SRAP) in at least one of the following procedures:
      the first terminal equipment (remote UE) uses default SRAP-related configuration; or
      the first terminal equipment (remote UE) receives RRC setup and/or RRC re-establishment and/or RRC resume and/or RRC reconfiguration message(s) that include(s) SRAP-related configuration,
      and/or, performing release of a SRAP entity (PC5 SRAP or SL SRAP) in at least one of the following procedures:
         the first terminal equipment (remote UE) switches from communication with the gNB via relay to direct communication with the gNB (indirect-to-direct path switch);
         PC5 connection (such as PC5-RRC connection or PC5 unicast link) between the first terminal equipment (remote UE) and the second terminal equipment (relay UE) is released; or
         the first terminal equipment (remote UE) enters a radio resource control idle (RRC_Idle) or radio resource control inactive (RRC _Inactive) state.
44. A method for transceiving information, applicable to a second terminal equipment (a relay UE), the method including:
   performing establishment of a SRAP (PC5 SRAP or SL SRAP) entity in at least one of the following procedures:
   being authorized and/or authenticated as a second terminal equipment (relay UE);
   establishing PC5 connection with a first terminal equipment (remote UE); (for example, establishing PC5 connection with the 1st first terminal equipment (remote UE));
   receiving an RRC setup request and/or an RRC re-establishment request and/or an RRC resume request transmitted by the first terminal equipment (remote UE); or
   receiving SL SRAP-related configuration included in an RRC setup and/or RRC re-establishment and/or RRC resume and/or RRC reconfiguration message(s) transmitted by the gNB,
   and/or, performing configuration, reconfiguration or modification of a PC5 SRAP or SL SRAP entity under the following conditions:
      receiving SL SRAP-related configuration included in an RRC setup and/or RRC re-establishment and/or RRC resume and/or RRC reconfiguration message(s) transmitted by the gNB,
      and/or, performing release of a PC5 SRAP or SL SRAP entity in at least one of the following procedures:
         the first terminal equipment (remote UE) switches from communication with a network device via the second terminal equipment to direct communication with the network device (indirect-to-direct path switch);
         PC5 connection (such as PC5-RRC connection or PC5 unicast link) between the first terminal equipment (remote UE) and the second terminal equipment (relay UE) is released; or
         there is no PC5 connection between the first terminal equipment (remote UE) and the second terminal equipment (relay UE),
            and/or,
         performing establishment of a Uu SRAP entity in at least one of the following procedures:
            being authorized and/or authenticated as a second terminal equipment (relay UE);
            establishing PC5 connection with a first terminal equipment (a remote UE); or
            receiving Uu SRAP-related configuration included in an RRC setup and/or RRC re-establishment and/or RRC resume and/or RRC reconfiguration message(s) transmitted by the gNB,
            and/or, performing configuration, reconfiguration or modification of a Uu SRAP entity under the following conditions:
               receiving SL SRAP-related configuration included in an RRC setup and/or RRC re-establishment and/or RRC resume and/or RRC reconfiguration message(s) transmitted by the gNB;
               and/or, performing release of a Uu SRAP entity under the following conditions:
                  the second terminal equipment (relay UE) no longer has PCS connection with the first terminal equipment (remote UE).

## Claims

1. An apparatus for transceiving information, applicable to a first terminal equipment (a remote UE), the apparatus comprising a first transceiving unit, the first transceiving unit being configured to:
establish PCS connection with a second terminal equipment (a relay UE); and
receive at least one of a radio resource control resume (RRC resume) message, a radio resource control re-establishment (RRC re-establishment) message or a radio resource control reconfiguration (RRC reconfiguration) message via the second terminal equipment (the relay UE) by means of default configuration.

2. The apparatus according to claim 1, wherein,
the default configuration includes default sidelink radio link control bearer configuration (sidelink RLC bearer configuration) and/or default sidelink relay adaptation protocol (SRAP)-related configuration.

3. The apparatus according to claim 2, wherein,
the default sidelink radio link control bearer configuration is sidelink radio link control 0 (SL-RLC0) default configuration or sidelink radio link control 1 (SL-RLC1) default configuration.

4. The apparatus according to claim 2, wherein,
the default SRAP-related configuration includes at least one of the following: a local or temporary identifier of the first terminal equipment (the remote UE), an added mapping list or a deleted mapping list.

5. The apparatus according to claim 2, wherein,
the default SRAP-related configuration includes default SRAP configuration of signaling radio bearer 0 (SRB0) and/or default SRAP configuration of signaling radio bearer 1 (SRB1).

6. The apparatus according to claim 1, wherein,
the first transceiving unit receives a signaling radio bearer 1 (SRB1) message by using default SRAP configuration of SRB1 and/or SL-RLC1 default configuration at a PCS interface between the first terminal equipment (the remote UE) and the second terminal equipment (the relay UE).

7. The apparatus according to claim 6, wherein,
the SRB 1 message bears the radio resource control resume (RRC resume) message and/or the radio resource control re-establishment (RRC re-establishment) message, or the SRB1 message is a first SRB1 message to be received by the first terminal equipment (the remote UE) after the signaling radio bearer 0 (SRB0) message of the first terminal equipment (the remote UE) is transmitted to a network device.

8. The apparatus according to claim 6, wherein the first transceiving unit is further configured to:
use the SRB1 default SRAP configuration and/or use the SL-RLC1 default configuration for SRB 1 when the first terminal equipment (the remote UE) transmits a radio resource control re-establishment request (RRC re-establishment request) message or a radio resource control resume (RRC resume request) message or when the first terminal equipment (the remote UE) initiates a radio resource control re-establishment procedure or a radio resource control resume procedure.

9. The apparatus according to claim 6, wherein,
the radio resource control resume (RRC resume) message or the radio resource control re-establishment (RRC re-establishment) message does not include sidelink relay adaptation protocol (SRAP)-related configuration.

10. The apparatus according to claim 9, wherein,
the first transceiving unit transmits a radio resource control resume complete (RRC resume complete) message and/or a radio resource control re-establishment complete (RRC re-establishment complete) message by using the SRB1 default SRAP configuration and/or the SL-RLC1 default configuration at the PC5 interface between the first terminal equipment (the remote UE) and the second terminal equipment (the relay UE).

11. The apparatus according to claim 6, wherein,
the radio resource control resume (RRC resume) message or the radio resource control re-establishment (RRC re-establishment) message includes sidelink relay adaptation protocol (SRAP)-related configuration.

12. The apparatus according to claim 11, wherein,
the first transceiving unit transmits the radio resource control resume complete (RRC resume complete) message and/or the radio resource control re-establishment complete (RRC re-establishment complete) message by using the SRAP-related configuration.

13. An apparatus for transceiving information, applicable to a second terminal equipment (a relay UE), the apparatus comprising a second transceiving unit, the second transceiving unit being configured to:
establish PC5 connection with a first terminal equipment (a remote UE); and
transmit at least one of a radio resource control resume (RRC resume) message, a radio resource control re-establishment (RRC re-establishment) message or a radio resource control reconfiguration (RRC reconfiguration) message to the first terminal equipment (the remote UE) by means of default configuration.

14. The apparatus according to claim 13, wherein,
the default configuration includes default sidelink radio link control bearer configuration (sidelink RLC bearer configuration) and/or default sidelink relay adaptation protocol (SRAP)-related configuration.

15. The apparatus according to claim 14, wherein,
the default sidelink radio link control bearer configuration is sidelink radio link control 0 (SL-RLC0) default configuration or sidelink radio link control 1 (SL-RLC1) default configuration; and/or
the default SRAP-related configuration includes at least one of the following: a local/temporary identifier of the first terminal equipment (the remote UE), an added mapping list or a deleted mapping list; and/or
the default SRAP-related configuration includes default SRAP configuration of signaling radio bearer 0 (SRB0) and/or default SRAP configuration of signaling radio bearer 1 (SRB1).

16. The apparatus according to claim 15, wherein,
the second transceiving unit transmits a signaling radio bearer 1 (SRB1) message by using the default SRAP configuration of SRB1 and/or the SL-RLC1 default configuration at the PC5 interface between the second terminal equipment (the relay UE) and the first terminal equipment (the remote UE).

17. The apparatus according to claim 16, wherein,
the SRB 1 message bears the radio resource control resume (RRC resume) message and/or the radio resource control re-establishment (RRC re-establishment) message, or the SRB1 message is a first SRB 1 message transmitted by the second terminal equipment (the relay UE) to the first terminal equipment after the first terminal equipment (the remote UE) transmits the signaling radio bearer 0 (SRBO) message to a network device.

18. The apparatus according to claim 16, wherein,
the radio resource control resume (RRC resume) message or the radio resource control re-establishment (RRC re-establishment) message includes sidelink relay adaptation protocol (SRAP)-related configuration.

19. An apparatus for transceiving information, applicable to a first terminal equipment (a remote UE), the apparatus comprising a third transceiving unit, the third transceiving unit being configured to:
establish PC5 connection with a second terminal equipment (a relay UE); and
receive at least one of a radio resource control setup (RRC setup) message, a radio resource control resume (RRC resume) message and a radio resource control re-establishment (RRC re-establishment) message via the second terminal equipment (the relay UE),
at least one of the RRC setup message, the RRC resume message or the RRC re-establishment message including sidelink relay adaptation protocol (SRAP)-related configuration.

20. The apparatus according to claim 19, wherein,
after the third transceiving unit receives the SRAP-related configuration in the RRC setup message, the first terminal equipment (the remote UE) is enabled to perform at least one of the following operations:
establishing an SRAP entity;
configuring parameters of the SRAP entity according to the SRAP-related configuration;
applying the terminal equipment identifier in the RRC setup message as a cell radio network temporary identifier (C-RNTI) of the first terminal equipment (the remote UE); or
transmitting a radio resource control setup complete (RRC setup complete) message based on the SRAP-related configuration.
